# EUROPEAN PATENT SPECIFICATION

(11) **EP 2 494 872 B1**
(45) Date of publication and mention of the grant of the patent: **26.11.2014**
(21) Application number: 10827051.3
(22) Date of filing: 26.10.2010
(51) Int. Cl.: A23F 5/40, A23F 5/36, A23L 1/307, A23L 2/60, A23L 1/236

(54) **LOW CALORIE COFFEE MIX COMPOSITION PREPARED BY USING D-TAGATOSE**
UNTER VERWENDUNG VON D-TAGATOSE HERGESTELLTE KAFFEEMISCHZUSAMMENSETZUNG MIT GERINGEM KALORIENGEHALT
COMPOSITION DE MÉLANGE DE CAFÉ ALLÉGÉE PRÉPARÉE À L'AIDE DE D-TAGATOSE

(30) Priority: 30.10.2009 KR 20090104193; 21.10.2010 KR 20100103067
(43) Date of publication of application: 05.09.2012
(73) Proprietor: CJ Cheiljedang Corporation, Jung-gu, Seoul 100-095 (KR)
(72) Inventor: LEE, Young Mi, Bucheon-si Gyeonggi-do 420-100 (KR); KANG, Myung Woo, Seoul 120-090 (KR); KIM, Young Jae, Seoul 151-772 (KR); KIM, Seong Bo, Seoul 120-830 (KR); PARK, Seung Won, Yongin-si Gyeonggi-do 446-727 (KR)
(74) Representative: Gordon, Jennifer Claire
(86) International application number: PCT/KR2010/007376
(87) International publication number: WO 2011/052967

(56) References cited:
- JP-A- 2002 500 028
- JP-A- 2004 520 072
- JP-A- 2007 503 214
- JP-A- 2008 000 147
- US-A1- 2006 034 993
- US-A1- 2007 082 106
- US-A1- 2008 226 773

## Description

### BACKGROUND

### 1. Field of the Invention

The present invention relates to a low calorie coffee mix composition with a natural sweet taste prepared by using D-tagatose instead of sugar for a diet or a low calorie coffee mix.

### 2. Discussion of Related Art

Sugar is a favoured sweetener because the quality of the sweet taste is good. However, recently, the number of obese people is increasing due to a combination of increased consumption of high carbohydrate food which is caused by the increasing consumption of favorite food such as soft drinks, coffee, and the like and insufficient exercise of the modem people. In the West such as the United States, such increase of obese people leads the increase of adult diseases so that it is becoming a serious problem that threatens the health of the people. Accordingly, consumers are gradually looking for the alternative sweetener of sugar that our bodies don't absorb, thereby developing low calorie sweetener for substituting sugar.

Sugar alcohols which are mostly used as a sugar substitute have an advantage that they are low in calories, but also have a disadvantage that they don't taste good overall and leave a nasty aftertaste as compared with sugar. Therefore, yet it doesn't satisfy the consumer who are used to the taste of sugar or fructose glucose syrup.

D-tagatose is another sweetener that is expected as a sugar substitute and a low calorie natural sugar which was recognized as Generally Recognized As Safe (GRAS) from FDA in 2001, allowing use as a sweetener in foods, drinks, health foods, diet additives, and the like.

It is known that D-tagatose has a sweetness of 92% relative to that of sucrose and has quality of sweetness like sugar. In addition, D-tagatose has low calorie, prebiotic effect, and a low glycemic index unlike sugar and other various sweeteners. Also, D-tagatose can be widely used in all of foods and drinks as health sweetener that can be taken in by diabetic patients with confidence because it does not cause tooth decay. US 2007/082106 and US 2006/034993 disclose beverages and foodstuffs comprising D-tagatose. A reduced caloric beverage comprising rebaudioside A as a sweetener is disclosed in US 2008/0226773.

### SUMMARY OF THE INVENTION

The present inventors analyzed the sweetness and the quality of sweetness of D-tagatose in order to substitute the whole quantity of sugar with D-tagatose in a coffee mix. Based on the analyzed data, the present inventors could be prepared a coffee mix composition having a similar or superior preference to those of existing coffee mix product. In addition, when the coffee mix composition was prepared by mixing D-tagatose and high-intensity sweetener derived from steviol glycosides, the composition with very high health functionality as well as an excellent taste could be prepared.

Accordingly, an object of the present invention is to provide a low calorie coffee mix product with a similar quality of taste to existing coffee mix products by using D-tagatose instead of sugar when preparing a coffee mix.

In addition, another object of the present invention is to provide a product with high health functionality and low calorie by mixing D-tagatose and high-intensity sweetener derived from steviol glycosides(Enzymatically Modified Stevia, Rebaudioside A), instead of sugar when preparing a coffee mix.

In order to achieve the above objects, the present invention provides a coffee mix composition prepared by using D-tagatose instead of sugar.

In addition, the present invention provides a coffee mix composition prepared by further adding high-intensity sweetener derived from steviol glycosides to D-tagatose instead of sugar.

The present invention can provide a low calorie coffee mix product having a good preference for a sweet taste, an aftertaste, and the like, while the quality of the taste of the existing coffee mix product is maintained and also its calorie is significantly decreased, by using only 100% D-tagatose or mixing D-tagatose with high-intensity sweetener derived from steviol glycosides, instead of sugar.

### BRIEF DESCRIPTION OF THE DRAWINGS

The above and other objects, features and advantages of the present invention will become more apparent to those of ordinary skill in the art by describing in detail exemplary embodiments thereof with reference to the attached drawings, in which:
Fig. 1 is a descriptive analysis of 11.5% D-tagatose aqueous solution to 10% sugar aqueous solution.
Fig. 2 is a descriptive analysis of 0.031% steviol glycosides aqueous solution to 5% sugar aqueous solution.

### DETAILED DESCRIPTION OF EXEMPLARY EMBODIMENTS

Hereinafter, exemplary embodiments of the present invention will be described in detail.

The amount of the D-tagatose is 50 wt% to 61 wt%, based on the total weight of the coffee mix composition.

In addition, the present invention provides a coffee mix composition prepared by further adding high-intensity sweetener derived from steviol glycosides to D-tagatose instead of sugar.

The high intensity-sweetener derived from steviol glycosides can be used for the present invention may be any product available from the general market place and may be preferably Rebaudioside A extracted from stevia.

Preferably, the amount of the Rebaudioside A may be 0.01 wt% to 0.15 wt% and the amount of D-tagatose may be 35 wt% to 55 wt%, based on the total weight of the coffee mix composition.

The present invention will be described in more detail according to the following Examples, but is not limited to Examples.

### <Example>

### Example 1: Measurment of Relative Sweetness of D-tagatose and Rebaudioside A

As a first experiment, relative sweetness of D-tagatose and Rebaudioside A to a sugar aqueous solution was measured by using a standard index of a sweet taste in order to identify a sensory property of D-tagatose and Rebaudioside A.

Samples having various concentrations were prepared by considering a theoretical sweetness of D-tagatose and Rebaudioside A; the intensity of sweet tastes according to each of the concentrations were scored and then drawn in a regression equation. Sensory evaluation was performed by 30 panel trained with a cognitive ability of a sweet taste, as a descriptive analysis. A standard index of a sweet taste as a control group and the investigation result about each of D-tagatose and Rebaudioside A are shown in the following Table 1 to Table 3.

**<Table 1>**

| Standard Criteria of Sweet Taste | | | | | | | |
|---|---|---|---|---|---|---|---|
| **Rating Score** | 2 | 4 | 6 | 8 | 10 | 12 | 14 |
| **Sugar Con.** | 2% | 4% | 6% | 8% | 10% | 12% | 16% |

| | | | | | | | |
|---|---|---|---|---|---|---|---|
| * Cognitive intensity of Sweet Taste = 0.8893 * sugar% + 0.6311 | | | | | | | |

**<Table 2>**

| Average Value of Cognitive intensity of Sweet Taste Per D-tagatose Concentrations | | | | | | |
|---|---|---|---|---|---|---|
| **D-tagatose Con.** | 2% | 3% | 5% | 6% | 7% | 16% |
| **Cognitive Strength of Sweet Taste (Descriptive Pannel)** | 2 | 2 | 4 | 5.2 | 6.11 | 13 |

| | | | | | | |
|---|---|---|---|---|---|---|
| * Regressive Model about Cognitive intensity of Sweet Taste of D-tagatose Cognitive Intensity of Sweet Taste = 0.812 * D-tagatose% + 0.109 | | | | | | |

**<Table 3>**

| Average Value of Cognitive Intensity of Sweet Taste Per Rebaudioside A Concentrations | | | | | | |
|---|---|---|---|---|---|---|
| **Rebaudioside A Con.** | 0.01% | 0.03% | 0.06% | 0.1% | 0.16% | 0.2% |
| **Cognitive Strength of Sweet Taste (Descriptive Panel)** | 2.72 | 5.17 | 6.15 | 7.06 | 8.04 | 8.89 |

| | | | | | | |
|---|---|---|---|---|---|---|
| * Regressive Model about Cognitive Intensity of Sweet Taste of Rebaudioside A Cognitive Intensity of Sweet Taste Y = 4.604* Rebaudioside A log (x) + 11.936 | | | | | | |

Sweetness of sugar can be obtained by substituting a desired sugar concentration in a state of aqueous solution when using each regression equation as mentioned above. The obtained desired sugar concentration was substituted in each regression equation thereby obtaining the corresponding concentrations of D-tagatose and Rebaudioside A, respectively. The above method for calculating can provide relative sweetness per concentrations so that it can be more accurate and convenient method as compared with the simple conventional method for calculating theoretical sweetness.

From the regression equation, it could be known that in the case of D-tagatose, the concentration of D-tagatose having the same sweet taste as 10% sugar was 11.6% and in the case of 10% sugar, the relative sweetness of D-tagatose was 0.87.

In the case of Rebaudioside A, as the concentration increase, bitter taste as well as sweet taste was also increased, but the cognitive intensity of sweet taste was not increased at above 0.2% of concentration. Accordingly, it could be known that the regression model was meaning at less than 0.2% of concentration and the concentration of Rebaudioside A having the same sweet taste as 5% sugar was 0.031 %, which means that the relative sweetness was 161.

### Example 2: Analysis of Sensory Profile of D-tagatose

As a second experiment, a sensory profile of D-tagatose to sugar was measured through a descriptive analysis that is a sensory test in order to analyze the quality of sweet taste of D-tagatose to sugar.

The concentration of D-tagatose aqueous solution having the same cognitive intensity of sweet taste as 10% sugar aqueous solution that is a control group was determined according to the regression equation of the above Example 1. Accordingly, trained panels listed sensory descriptive terms that could be felt in 10% sugar aqueous solution and 11.6% D-tagatose solution and then defined the properties that could be commonly recognized as a definite term. The profiles of two sweeteners were compared by giving a intensity score by using 15-point scale per product based on the defined terms.

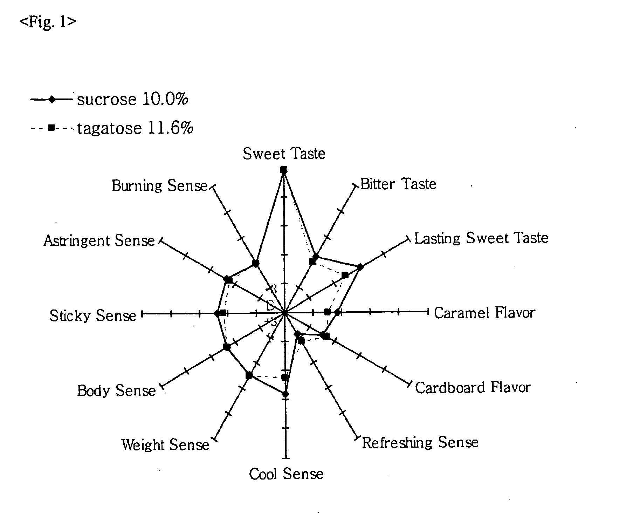

The results are listed in Fig. 1. As shown in Fig. 1, it was analyzed that the sugar aqueous solution had a long lasting sweet taste, a strong caramel flavor that can be tasted in heated sugars, and also a cool refreshing sense. On the other hand, it was found that D-tagatose aqueous solution has a refreshing sense like peppermint, and a clean sweet taste because it had a short lasting sweet taste and weak bitter taste, and also weak properties of any flavors other than the unique flavors of sugar.

### Example 3: Analysis of Sensory Profile of Steviol glycosides

A sensory profile of steviol glycosides to sugar was measured by using the same descriptive analysis as Example 2.

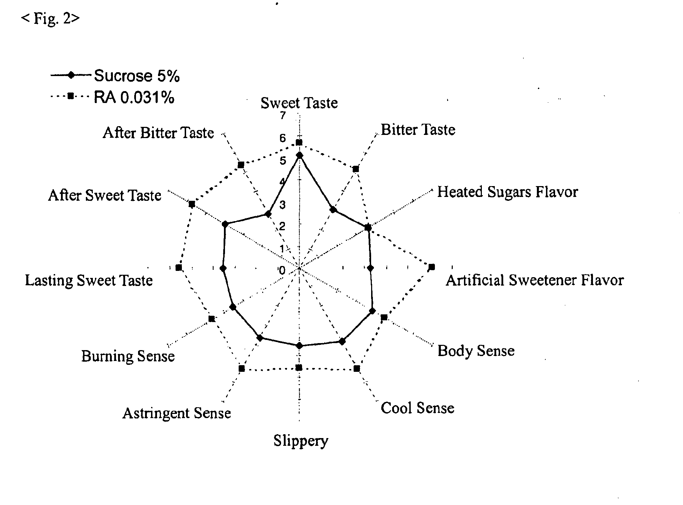

The results are listed in Fig. 2. As shown in Fig. 2, the steviol glycosides had very long lasting sweet taste and a strong bitter taste so that its sweet taste sense was different from the sweet taste of the existing sugar. An overall mouth sense is expected to have the similar sense as sugar because of its strong astringent sense, but its strong body sense, in the case of mouth sense as compared with those of sugar. When the sweetener having a short lasting sweet taste, a weak astringent sense and a weak bitter taste was mixed in small quantity considering the sensory profile of the steviol glycosides, the advantages of the high intensity sweetener may be maximized.

### Example 4: Investigation of Consumer Preference for Coffee Mix Prepared by Using D-tagatose

A consumer preference was confirmed when applying D-tagatose to a coffee mix and a consumer survey was performed in order to establish the amount of D-tagatose used for substituting sugar.

The consumer survey of 30-40 general housewives was conducted and was performed in a preference test. That is, a pair of the coffee including sugar as a control group and the coffee including D-tagatose instead of sugar as an experimental group was prepared and then the survey allows the housewives to choose the preferred product after tasting in order.

Five types of coffee drinks (called S1, S2, S3, S4, and S5, respectively), which were added with 4 g, 5 g, 6 g, 7 g, and 8 g of sugar, respectively, were used as the control groups and five types of coffee drinks (called T1, T2, T3, T4, and T5, respectively), which were added with 4.8 g, 6.0 g, 7.3 g, 8.5 g, and 9.7 g of D-tagatose that had the same sweet tastes as each of sugar concentrations, were used as the experimental groups. The value calculated from the regression equation in Table 2 was set as the amount of D-tagatose. Total five pairs were investigated, and the each pair was independently evaluated. The mixing ratios of coffee drinks are listed in the following Table 4.

**<Table4>**

| Mixing Ratio | | | | | | | | | | |
|---|---|---|---|---|---|---|---|---|---|---|
| | S1 | T1 | S2 | T2 | S3 | T3 | S4 | T4 | S5 | T5 |
| **D-tagatose** | - | 4.8 g | - | 6.0g | - | 7.3 g | - | 8.5 g | - | 9.7 g |
| **Sugar** | 4.0 g | - | 5.0 g | - | 6.0 g | - | 7.0 g | - | 8.0 g | - |
| **Coffee** | 1.6 g | 1.6 g | 1.6 g | 1.6g | 1.6 g | 1.6 g | 1.6g | 1.6 g | 1.6 g | 1.6 g |
| **Creamer** | 4.5 g | 4.5 g | 4.5 g | 4.5 g | 4.5 g | 4.5 g | 4.5 g | 4.5 g | 4.5 g | 4.5 g |
| **D-tagatose wt%** | 44% | | 50% | | 54 % | | 58 % | | 61 % | |

**<Table 5>**

| Investigation of Consumer Preferences for Coffee Mix Applied with D-tagatose to Existing Coffee Mix | | | | | | | | | | |
|---|---|---|---|---|---|---|---|---|---|---|
| | **Test 1** | | **Test 2** | | **Test 3** | | **Test 4** | | **Test 5** | |
| | S1 | T1 | S2 | T2 | S3 | T3 | S4 | T4 | S5 | T5 |
| **Preference Ratio (%)** | 57 | 43 | 49 | 51 | 46 | 54 | 44 | 56 | 45 | 55 |

For Test 1, it could be known that the preference ratio to S1 was 57% and the preference ratio to T1 was 43%, which means that the preference for the coffee added with sugar was relatively high. On the other hand, for Test 2 to Test 5, the preference ratios applied with D-tagatose were 51%, 54%, 56%, and 55%, respectively. Accordingly, the D-tagatose can be expected to have an excellent quality of taste as compared with other substitute sweeteners because of having the same or high preference as sugar.

### Example 5: Investigation of Consumer Preferences for Coffee Mix Prepared by Using Sweeteners Mixed with D-tagatose and Steviol Glycosides

The amounts of D-tagatose and Rebaudioside A corresponding to the intensity of sweet taste of sugar in the coffee mix prepared by using the existing sugar were calculated from the regression equation of Example 1, and then determined through a preliminary experiment. The mixing ratios are listed in the following Table 6.

**<Table 6>**

| Mixing Ratio | | | | |
|---|---|---|---|---|
| **Name of Raw Material** | Existing One | M1 | M2 | N3 |
| **Rebaudioside A** | - | 0.011 g | 0.008 g | 0.003 g |
| **D-tagatose** | - | 4 g | 5 g | 7 g |
| **Sugar** | 6.0 g | - | - | - |
| **Coffee** | 1.6 g | 1.6 g | 1.6 g | 1.6 g |
| **Creamer** | 4,5 g | 4,5 g | 4.5 g | 4.5 g |
| **D-tagatose wt%** | - | 40% | 45% | 5,3% |
| **Rebaudioside A wt%** | - | 0.10% | 0.07% | 0.02% |

The consumer preferences for the coffee drinks prepared by using the above mixing ratios were investigated. The consumer preferences were investigated through 54 general housewives. 9-point preference scales were used and then converted into 5 points to express in order to express by clearly classifying the difference between products. The assessment items were composed of major four sub-properties as well as an overall preference. The results are listed in Table 7.

**<Table 7>**

| Investigation Result of Consumer Preferences for Coffee Mix Applied with D-tagatose and Rebaudioside A to Existing Coffee Mix | | | | | |
|---|---|---|---|---|---|
| | **Overall Preference** | **Color Preference** | **Overall Flavor Preference** | **Taste Preference** | **Aftertaste Preference** |
| **Existing One** | 3.30 | 3.62 | 3.52 | 3.34 | 3.22 |
| **M1** | 3.31 | 3.49 | 3.32 | 3.30 | 3.20 |
| **M2** | 3.35 | 3.55 | 3.45 | 3.32 | 3.25 |
| **M3** | 3.41 | 3.63 | 3.47 | 3.40 | 3.30 |

It was found that the overall preference for sugar-applied coffee was 3.30 points and the overall preferences for D-tagatose and Rebaudioside A-mixed coffee were 3.31 points for M1, 3.35 points for M2 and 3.41 points for M3. It can be expected that when D-tagatose having a short lasting sweet taste and a weak bitter taste and Rebaudioside A having a long lasting sweet taste and a strong bitter taste were mixed, the sensory complementary effect was exhibited thereby obtaining the taste and quality that have the same or higher level as compared to sugar.

### Comparative Example 1: Investigation of Consumer Preferences for Coffee Mix Mixed with Erythritol and Sucralose

The present inventors performed the consumer survey as Example 3 in order to identifying the quality of taste to the existing coffee mix product and the coffee mix prepared by mixing erythritol and sucralose that are sugar alcohols and mostly used as the sweetener for substituting sugar.

The mixing ratio of coffee mix prepared by mixing erythritol and sucralose are shown in Table 8 and the results are listed in Table 9.

**<Table 8>**

| Mixing Ratio | | |
|---|---|---|
| **Name of Raw Material** | **Existing One** | **Coffee Mix Mixed with Erythritol and Sucralose** |
| **Erythritol** | - | 5.528g |
| **Sucralose** | | 0.007 g |
| **Sugar** | 6.0000 g | - |
| **Coffee** | 1.6000 g | 1.6000 g |
| **Creamer** | 4.5000 g | 4.5000 g |

**<Table 9>**

| Investigation Result of Consumer Preferences for Coffee Mix with Sucralose and Erythritol to Existing Coffee Mix | | | | | | | | |
|---|---|---|---|---|---|---|---|---|
| | **Overall Preference** | **Flavor Preference** | **Taste Preference** | **Sweet Taste Preference*** | **Pleasant Taste Preference** | **Bitter Taste Preference** | **Bitter Taste Strength** | **Aftertaste Preference** |
| **Existing One** | 3.45 | 3.48 | 3.50 | 3.50 | 3.41 | 3.47 | 3.09 | 3.49 |
| **Coffee Mix Mixed with Erythritol and sucralose** | 3.28 | 3.53 | 3.33 | 2.99 | 3.44 | 3.42 | 2.89 | 3.08 |

As shown in the above results, it was found that the overall preference for the coffee mix with erythritol and sucralose was 3.28 points and the overall preference for the existing sugar-applied coffee mix was 3.45 points, which means that the overall preference difference between two products was not statistically significant, but the preferences of the sweet taste and aftertaste were decreased as compared with the existing sugar-applied coffee. Accordingly, the present inventors found out that D-tagatose-applied coffee had an excellent quality of taste.

While the invention has been shown and described with reference to certain exemplary embodiments thereof, it will be understood by those skilled in the art that various changes in form and details may be made therein without departing from the scope of the invention as defined by the appended claims.

## Claims

1. A low calorie coffee mix composition, prepared by using D-tagatose instead of sugar, wherein the D-tagatose is contained in an amount of 50 wt% to 61 wt% based on the total weight of the coffee mix composition.

2. A low calorie coffee mix composition as claimed in claim 1, prepared by mixing high-intensity sweetener derived from steviol glycosides and D-tagatose, instead of sugar, wherein the high-intensity sweetener derived from steviol glucosides is contained in an amount of 0.01 wt% to 0.15 wt% based on the total weight of the coffee mix composition.

3. The composition of claim 2, wherein the high-intensity sweetener derived from steviol glucosides is Rebaudioside A derived from stevia.

## Patentansprüche

1. Kalorienarme Kaffemischung-Zusammensetzung, hergestellt unter der Nutzung von D-Tagatose anstatt von Zucker, wobei die D-Tagatose mit einem Anteil von 50 Gew.-% bis 61 Gew.-%, bezogen auf das Gesamtgewicht der Kaffemischung-Zusammensetzung, enthalten ist.

2. Kalorienarme Kaffeemischung-Zusammensetzung nach Anspruch 1, hergestellt durch Vermischung hochintensiver, von Steviol-Glykosiden abgeleiteter Süßstoffe und D-Tagatose, anstatt von Zucker, wobei der hochintensive, von Steviol-Glykosiden abgeleitete Süßstoff mit einem Anteil von 0,01 Gew.-% bis 0,15 Gew.-%, bezogen auf das Gesamtgewicht der Kaffeemischung-Zusammensetzung, enthalten ist.

3. Zusammensetzung nach Anspruch 2, wobei der hochintensive, von Steviol-Glykosiden abgeleitete Süßstoff Rebaudiosid A ist.

## Revendications

1. Composition de mélange de cafés à faible teneur en calories, préparée en utilisant du D-tagatose en lieu et place de sucre, dans laquelle le D-tagatose est présent en quantité de 50 % en poids à 61 % en poids sur la base du poids total de la composition de mélange de cafés.

2. Composition de mélange de cafés à faible teneur en calories selon la revendication 1, préparée en mélangeant un édulcorant de forte intensité tiré de glucosides de stéviol et de D-tagatose, en lieu et place de sucre, dans laquelle l'édulcorant de forte intensité tiré de glucosides de stéviol est présent en quantité de 0,01 % en poids à 0,15 % en poids sur la base du poids total de la composition de mélange de cafés.

3. Composition selon la revendication 2, dans laquelle l'édulcorant de forte intensité tiré de glucosides de stéviol est le Rebaudioside A tiré de la stévia.
